Europäisches Patentamt

European Patent Office

Office européen des brevets

(11) Veröffentlichungsnummer: **0 453 410 A1**

(12) # EUROPÄISCHE PATENTANMELDUNG

(21) Anmeldenummer: 91810283.1

(51) Int. Cl.⁵ : **G02C 7/04**

(22) Anmeldetag: 16.04.91

(30) Priorität: 23.04.90 CH 1357/90

(43) Veröffentlichungstag der Anmeldung:
23.10.91 Patentblatt 91/43

(84) Benannte Vertragsstaaten:
AT BE CH DE DK ES FR GB GR IT LI LU NL SE

(71) Anmelder: CIBA-GEIGY AG
Klybeckstrasse 141
CH-4002 Basel (CH)

(72) Erfinder: Höfer, Peter
Karlsbader Strasse 50
W-8750 Aschaffenburg (DE)
Erfinder: Markus, Winfried
Bernhardstrasse 18
W-8750 Aschaffenburg (DE)
Erfinder: Hagmann, Peter, Dr.
Chamissostrasse 20
W-8759 Hösbach-Bahnhof (DE)

(54) Kontaktlinsensatz.

(57)    Es wird ein standardisierter Kontaktlinsensatz aus mehreren Multifokal- insbesondere Bifokallinsen mit abgestuften Scheitelbrechwerten und standardisiertem Linsendesign beschrieben, wobei zwischen Fernteil und Nahteil jeder Linse eine für den gesamten Linsensatz einheitliche Nahteiladdition vorgesehen ist.

Die Versorgung von Presbyopen mit Kontaktlinsen stellt derzeit ein noch nicht zufriedenstellend gelöstes Problem dar. Dies liegt zum einen an der Vielzahl unterschiedlicher Parameter für das zu wählende Linsendesign, wie beispielsweise Kontaktlinsengeometrie, Anordnung und Größe der Nah/Fernzone und des Wertes für die Nahaddition, die eine reproduzierbare und rationelle Herstellung derartiger Kontaktlinsen nicht ermöglichen. Eine weitere Schwierigkeit besteht in der unrationellen Anpassung und Abgabe der Linsen an presbyope Kontaktlinsenträger. Eine herkömmliche Anpassung läuft beispielsweise wie folgt ab:

1. Anpaßstufe: monofokale Linse, insbesondere Weichlinse

2. Anpaßstufe: Anpaßlinse mit Zentrierring oder Probelinse

3. Anpaßstufe: Anpassung einer annähernd passenden Bifokallinse

4. Anpaßstufe: Bestimmung und Bestellung der Rezeptlinse

5. Anpaßstufe: Anpassung der Rezeptlinse

6. Anpaßstufe: Überprüfung des Sitzes und Überrefraktion

7. Anpaßstufe: Bestimmung der endgültigen Bifokallinse; Abgabe der endgültigen Rezeptlinsen

Eine derartige Anpaßprozedur dauert in der Regel sechs bis acht Wochen.

Bekannte Bifokalkontaktlinsen sind nach dem bivisuellen (simultanen) Prinzip oder nach dem alternierenden Prinzip aufgebaut. Für Bifokalkontaktlinsen nach dem Simultanprinzip ist es bekannt, zylinderförmig segmentierte, radial segmentierte oder vertikal segmentierte Linsen (Sonderdruck aus dem NOJ, Juni 1969, Günter Giefer "Die verschiedenen Bifokallinsensysteme - Möglichkeiten und Grenzen ihrer Anpassung"; DE-PS 32 22 099) zu verwenden.

Während bei den simultanen Bifokalkontaktlinsen auf der Retina des Kontaktlinsenträgers gleichzeitig scharfe Bilder von nah und weit entfernten Objekten erzeugt werden, sind Bifokalkontaktlinsen vom alternierenden Typ so aufgebaut, daß die Nahzone und die Fernzone der Kontaktlinse alternierend vor der Augenpupille zu liegen kommt und dementsprechend nur ein scharfes Bild für den jeweiligen Sehbereich auf der Retina vorhanden ist. Nachteilig wird bei den Kontaktlisen vom alternierenden Typ angesehen, daß beim Wechsel zwischen Fern- und Nahteil Bildsprünge auftreten.

Ferner sind Bifokalkontaktlinsen mit gleitenden Scheitelbrechwertübergängen bekannt, wobei zwischen einer maximalen und minimalen Scheitelbrechwertkraft alle Werte enthalten sind. Auch bifokale Kontaktlinsen mit minimaler sphärischer Aberration sind bekannt. Hierdurch soll ein relativ großer Tiefenschärfenbereich erzeugt werden (DOZ KL 7/1988 Seiten 74, 75 und SO 9/1989, Seiten 34 bis 37). Auch Zoom-Linsen sind für die Presbyopiekorrektur bekannt (Contactologia 11 D (1989), S. 122 - 125). Die Vielzahl der bekannten Linsentypen zeigt, daß eine befriedigende Konzipierung einer Presbyopenkontaktlinse noch nicht gefunden wurde.

Aufgabe der Erfindung ist es in diesem Zusammenhang, einen Kontaktlinsensatz zu schaffen, mit dem die Anpassung und Abgabe an Presbyopenkontaktlinsenträger erheblich vereinfacht wird.

Diese Aufgabe wird gelöst durch einen Kontaktlinsensatz, der aus mehreren Kontaktlinsen besteht, deren Scheitelbrechwerte sich in bestimmten Abstufungen voneinander unterscheiden und der dadurch gekennzeichnet ist, daß

– jede Linse des Satzes als Multifokallinse, insbesondere Bifokallinse, ausgebildet ist und einen einheitlichen Standarddurchmesser für den gesamten Linsensatz sowie eine einheitliche Rückflächengeometrie aufweist; und

– zwischen Fernteil und Nahteil jeder Linse eine für den gesamten Linsensatz einheitliche Standardaddition der Scheitelbrechwerte vorgesehen ist.

Als bevorzugte Rückflächengeometrie wird eine elliptische Geometrie zum Einsatz gebracht, wie sie beispielsweise aus der Deutschen Offenlegungsschrift 30 31 749 bekannt ist. Bei der bevorzugten für den standardisierten Linsensatz einheitlichen Rückflächengeometrie besitzen alle Schnitte mit Ebenen, die die optische Achse der Linse enthalten, einen für den gesamten Linsensatz einheitlichen Krümmungsradius innerhalb eines Bereiches von 6,0 bis 9,0 mm und eine für den gesamten Kontaktlinsensatz einheitliche numerische Exzentrizität im Bereich von 0,2 bis 0,9.

In bevorzugter Weise liegt der einheitliche Wert der für den gesamten Linsensatz standardisierten Nahteiladdition in einem Bereich von + 2,0 bis + 3,5 Dioptrien. Ein bevorzugter Bereich der Nahteiladdition ist 3,0 bis 3,5 Dioptrien, wobei ein Wert von 3,25 für die Nahteiladdition bevorzugt wird.

Bevorzugt kommt eine multifokale, insbesondere bifokale Kontaktlinse vom Simultantyp zum Einsatz. In bekannter Weise kommen hierfür in Frage zylinderförmig segmentierte, radial segmentierte und vertikal segmentierte Scheitelbrechwertzonen (z. B. deutsche Patentschrift 32 22 099) für den Nahund Fernteil zur Anwendung. Bevorzugt wird eine koaxiale Anordnung der Scheitelbrechwertzonen, insbesondere des Nahund Fernteils, wobei das Zentrum, das den Nah- oder Fernteil aufweisen kann, einen Durchmesser von ca. 3 mm besitzt. Bevorzugt liegt das Nahteil im Zentrum. Dies bringt beispielsweise bei plötzlicher Verdunkelung den Vorteil, daß es zu einer flächenmäßigen Ausdehnung des Fernteils, der dann peripher um den zentralen Nahteil angeordnet ist, kommt.

In bevorzugter Weise kann jede standardisierte Bifokalkontaktlinse des Kontaktlinsensatzes ein corneasklerales Design aufweisen. Der Standardlinsendurchmesser jeder Linse kann einen einheitlichen Wert in einem Bereich von 8,5 mm bis 17 mm haben. Auf diese Weise verbleibt am Linsendesign noch genügend Platz für Stabilisierungsflächen, beispielsweise in Form von sichelförmigen Stabilisierungsflächen, wie sie aus der deutschen Patentschrift 32 22 099 bekannt sind. Auch die in dieser Patentschrift beschriebene Anordnung der Nah- und Fernteile der Linsen kann bei der Erfindung zur Anwendung kommen.

Die Abstufung der Scheitelbrechwerte der einzelnen Linsen des Kontaktlinsensatzes beträgt bevorzugt 0,25 Dioptrien und kann jedoch auch größer gewählt werden. Man kommt bei einer derartigen Abstufung mit einem Anpaß- bzw. Verkaufssatz von ca. 50 Linsen aus, wobei man Scheitelbrechwerte von plan bis - 6,0 Dioptrien berücksichtigt. Bevorzugterweise sind die Linsen im Linsensatz nach den Scheitelbrechwerten der Fernkorrektur sortiert.

Mit diesem standardisierten Verkaufssatz ist der Anpasser in der Lage, die Linse direkt aus diesem Verkaufssatz abzugeben. Man hat einen Verkaufssatz, wie er für die Anpassung von Kurzsichtigen üblich ist. Der Anpasser braucht die Auswahl der Linsen lediglich nach der erforderlichen Fernkorrektur vorzunehmen. Auf diese Weise kommt der presbyope Kontaktlinsenträger direkt zu einer optimalen Korrektur, und er kann sich sofort von der Wirkungsweise der Linse überzeugen. Mit der beschriebenen standardisierten Multifokallinse, insbesondere Bifokallinse, kann ein großer Prozentsatz aller Alterssichtigen angepaßt werden. Bei Verwendung einer Kontaktlinse benötigt man grundsätzlich eine Addition, die um +0,5 Dioptrien über dem Scheitelbrechwert der adäquaten Brille liegt.

Aufgrund der standardisierten Parameter der Linse ist auch eine rationelle Produktion der Linsen, beispielsweise nach dem sogenannten Fullmold-Verfahren, möglich. Dies gilt sowohl für harte als auch für weiche Linsen, wobei unterschiedliche Sauerstoffdurchlässigkeiten und unterschiedliche Wassergehalte durch entsprechende Formulierung der Kontaktlinsen-materialien eingestellt werden können.

## Patentansprüche

1. Kontaktlinsensatz, der aus mehreren Kontaktlinsen besteht, deren Scheitelbrechwerte sich in bestimmten Abstufungen voneinander unterscheiden,
dadurch gekennzeichnet, daß
   – jede Linse des Satzes als Multifokallinse ausgebildet ist und einen einheitlichen Standarddurchmesser sowie eine einheitliche Standardrückflächengeometrie aufweist und
   – zwischen Fernteil und Nahteil jeder Linse eine für den gesamten Linsensatz einheitliche Addition (Standard-addition) der Scheitelbrechwerte vorgesehen ist.

2. Kontaktlinsensatz nach Anspruch 1, dadurch gekennzeichnet, daß die Standardaddition in einem Bereich von + 2,0 bis 3,50 Dioptrien liegt.

3. Kontaktlinsensatz nach Anspruch 1 oder 2, dadurch gekennzeichnet, daß die Addition etwa 3,25 Dioptrien beträgt.

4. Kontaktlinsensatz nach einem der Ansprüche 1 bis 3, dadurch gekennzeichnet, daß jede Linse als Simultanlinse ausgebildet ist.

5. Kontaktlinsensatz nach Anspruch 4, dadurch gekennzeichnet, daß Fernteil und Nahteil jeder Linse in konzentrischen Scheitelbrechwertzonen angeordnet sind.

6. Kontaktlinsensatz nach Anspruch 5, dadurch gekennzeichnet, daß die zentrale Scheitelbrechwertzone jeder Linse einen Durchmesser von etwa 3 mm aufweist.

7. Kontaktlinsensatz nach einem der Ansprüche 1 bis 6, dadurch gekennzeichnet, daß die zentrale Scheitelbrechwertzone den Nahteil jeder Linse bildet.

8. Kontaktlinsensatz nach einem der Ansprüche 1 bis 6, dadurch gekennzeichnet, daß die Nahzone in der Peripherie der jeweiligen Linse liegt.

9. Kontaktlinsensatz nach einem der Ansprüche 1 bis 8, dadurch gekennzeichnet, daß der Standardlinsendurchmesser einen Wert in einem Bereich von 8,5 mm bis 17 mm hat.

10. Kontaktlinsensatz nach einem der Ansrpüche 1 bis 9, dadurch gekennzeichnet, daß die Scheitelbrechwertabstufung zwischen den einzelnen Linsen des Linsensatzes mindestens 0,25 Dioptrien beträgt.

11. Kontaktlinsensatz nach einem der Ansprüche 1 bis 10, dadurch gekennzeichnet, daß die Linsen im Linsensatz nach den Scheitelbrechwerten der Fernkorrektur sortiert sind.

**Europäisches Patentamt**

## EUROPÄISCHER RECHERCHENBERICHT

Nummer der Anmeldung

EP 91 81 0283

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | CONTACTOLOGIA, Band 11D, 1989, Seiten 122-125, F. Enke Verlag, Stuttgart, DE; G. COURSAUX et al.: "Presbyopiekorrektion mit Super-Zoom-Linsen, klinische und paraklinische Untersuchung" * Ganzes Dokument * --- | 1 | G 02 C 7/04 |
| A,D | DEUTSCHE OPTIKER ZEITUNG, Juli 1988, Seiten 74-75; J.A. KRESS et al.: "Eine neuartige Bifokalkontaktlinse" * Ganzes Dokument * --- | 1 | |
| A,D | DE-A-3 222 099 (TITMUS EUROCON KONTAKTLINSEN) * Patentansprüche * --- | 1,4 | |
| A | US-A-4 869 587 (J.L. BREGER) * Zusammenfassung * --- | 1,4 | |
| A,D | EP-A-0 046 895 (TITMUS EUROCON KONTAKTLINSEN) * Patentansprüche * --- | 1 | RECHERCHIERTE SACHGEBIETE (Int. Cl.5) G 02 C 7/04 |
| A | EP-A-0 033 141 (TITMUS EUROCON KONTAKTLINSEN) * Patentansprüche * --- | 1 | |
| A | DE-A-3 246 306 (TITMUS EUROCON KONTAKTLINSEN) --- | | |
| A | EP-A-0 201 231 (B.A. HOLDEN) ----- | | |

Der vorliegende Recherchenbericht wurde für alle Patentansprüche erstellt

| Recherchenort | Abschlußdatum der Recherche | Prüfer |
|---|---|---|
| DEN HAAG | 12-06-1991 | CALLEWAERT-HAEZEBROUCK H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)